(19) **Europäisches Patentamt / European Patent Office / Office européen des brevets**

(11) **EP 4 303 717 B1**

(12) **FASCICULE DE BREVET EUROPEEN**

(45) Date de publication et mention de la délivrance du brevet:
**24.09.2025 Bulletin 2025/39**

(21) Numéro de dépôt: **23183696.6**

(22) Date de dépôt: **05.07.2023**

(51) Classification Internationale des Brevets (IPC):
**G06F 7/58** *(2006.01)*

(52) Classification Coopérative des Brevets (CPC):
**G06F 7/588; H04L 2209/26**

(54) **PROCÉDÉ ET DISPOSITIF DE QUALIFICATION D'UN GÉNÉRATEUR DE NOMBRES ALÉATOIRES, ET PROCÉDÉ DE CONCEPTION DU GÉNÉRATEUR DE NOMBRES ALÉATOIRES**

VERFAHREN UND VORRICHTUNG ZUR QUALIFIZIERUNG EINES ZUFALLSZAHLGENERATORS UND VERFAHREN ZUM ENTWURF EINES ZUFALLSZAHLGENERATORS

METHOD AND DEVICE FOR QUALIFYING A RANDOM NUMBER GENERATOR, AND METHOD FOR DESIGNING THE RANDOM NUMBER GENERATOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.07.2022 FR 2207035**

(43) Date de publication de la demande:
**10.01.2024 Bulletin 2024/02**

(73) Titulaire: **THALES**
**92400 Courbevoie (FR)**

(72) Inventeurs:
• **GARRIDO, Eric**
**92622 GENNEVILLIERS CEDEX (FR)**
• **DUPIN, Aurélien**
**92622 GENNEVILLIERS CEDEX (FR)**
• **CHRISTIN, Antoine**
**92622 GENNEVILLIERS CEDEX (FR)**
• **QUATRAVAUX, Lucile**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
• **MARKKU-JUHANI O SAARINEN: "On Entropy and Bit Patterns of Ring Oscillator Jitter", ARXIV.ORG, CORNELL UNIVERSITY LIBRARY, 201 OLIN LIBRARY CORNELL UNIVERSITY ITHACA, NY 14853, 3 February 2021 (2021-02-03), XP081873622**
• **BERNARD FLORENT ET AL: "From Physical to Stochastic Modeling of a TERO-Based TRNG", JOURNAL OF CRYPTOLOGY, SPRINGER US, NEW YORK, vol. 32, no. 2, 29 March 2018 (2018-03-29), pages 435 - 458, XP036739175, ISSN: 0933-2790, [retrieved on 20180329], DOI: 10.1007/S00145-018-9291-2**
• **YANG BOHAN ET AL: "On-chip jitter measurement for true random number generators", 2017 ASIAN HARDWARE ORIENTED SECURITY AND TRUST SYMPOSIUM (ASIANHOST), IEEE, 19 October 2017 (2017-10-19), pages 91 - 96, XP033338280, DOI: 10.1109/ASIANHOST.2017.8354001**
• **MA YUAN ET AL: "On the Entropy of Oscillator-Based True Random Number Generators", 10 January 2017, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 165 - 180, ISBN: 978-3-540-74549-5, XP047404289**

• BAUDET MATHIEU ET AL: "On the Security of Oscillator-Based Random Number Generators", JOURNAL OF CRYPTOLOGY, SPRINGER US, NEW YORK, vol. 24, no. 2, 20 October 2010 (2010-10-20), pages 398 - 425, XP037087985, ISSN: 0933-2790, [retrieved on 20101020], DOI: 10.1007/S00145-010-9089-3

• MAREK LABAN ET AL: "HECTOR : D4.1 Demonstrator Specification", 3 May 2017 (2017-05-03), XP055531437, Retrieved from the Internet <URL:https://hector-project.eu/downloads/HECTOR-D4.1-PU-M26.pdf> [retrieved on 20181207]

**Description**

La présente invention concerne un procédé de qualification d'un générateur de nombre(s) aléatoire(s) pour le respect d'un seuil de taux d'entropie prédéfini.

La présente invention a également pour objet un dispositif électronique de qualification d'un générateur de nombre(s) aléatoire(s) pour le respect d'un seuil de taux d'entropie prédéfini.

L'invention concerne également un procédé de conception d'un générateur de nombre(s) aléatoire(s).

L'invention concerne le domaine de la génération de nombres aléatoires matériel, aussi appelé vraie génération de nombres aléatoires (de l'anglais *True Randon Number Generator* TRNG), par exemple embarqué au sein de composants hardware FPGA (de l'anglais *Field Programmable Gate Array*) ou ASIC (de l'anglais *Application-Specific Integrated Circuit*).

Il est connu de générer des nombres aléatoires à partir d'oscillateurs à anneau et d'un module d'acquisition acquérant, suivant une fréquence prédéfinie, un bit en sortie de chaque oscillateur à anneau. Le générateur comprend en outre généralement un module de composition implémentant une fonction de composition des bits acquis pour obtenir un bit généré. Chaque génération d'un bit généré par le générateur est appelée « tirage » et forme le nombre aléatoire. Par exemple dans l'état de l'art :

XPO81873622 MARKKU-JUHANI O SAARINEN: "On Entropy and Bit Patterns of Ring Oscillator Jitter published (2021-02-03),
XP036739175 BERNARD FLORENT ET AL: "From Physical to Stochastic Modeling of a TERO-Based TRNG", JOURNAL OF CRYPTOLOGY, SPRINGER US, NEW YORK, vol. 32, no. 2, 29 mars 2018 (2018-03-29), pages 435-458, ISSN: 0933-2790, DOI: 10.1007/S00145-018-9291-2,
XP033338280 YANG BOHAN ET AL: "On-chip jitter measurement for true random number generators", 2017 ASIAN HARDWARE ORIENTED SECURITY AND TRUST SYMPOSIUM (ASIANHOST), IEEE, 19 octobre 2017 (2017-10-19), pages 91-96, DOI: 10.1109/ ASIANHOST.2017.8354001.

A chaque tirage, les valeurs acquises comportent une partie déterministe liée à des caractéristiques déterminables de chaque oscillateur à anneau, et une partie aléatoire liée à des caractéristiques imprévisibles de chaque oscillateur à anneau.

Dans certaines applications telles que la cryptographie, il est nécessaire d'assurer que les bits générés lors de tirages successifs sont bien aléatoires.

Une manière de mesurer le caractère aléatoire est l'entropie de Shanon d'une suite de D tirages successifs. Plus l'entropie de Shannon est grande et plus la suite de D tirages successifs est imprévisible, i.e. aléatoire.

L'entropie de Shannon d'une variable X est l'incertitude de la variable X. L'entropie de Shannon de la variable X est définie par l'équation suivante :

[MATH 1]

$$H_{sh}(X) = -E\big(Log_2(P(X = x))\big) = -\sum_x P(X = x)\, Log_2\big(P(X = x)\big)$$

où $E(\ )$ est l'espérance,
$Log_2(\ )$ est le logarithme en base 2,
$\Sigma$ est la somme
$x$ est toute valeur prise par la variable X, et
$P(X = x)$ est la probabilité que la variable X prenne la valeur $x$.

On définit en outre un taux d'entropie du générateur, comme étant égal à la limite, si elle existe, quand un nombre de tirages D tend vers l'infini, du rapport entre l'entropie de Shannon de la variable aléatoire $X = (S_1, S_2, \ldots, S_D)$ modélisant les D tirages successifs de la source d'aléa, divisé par le nombre D de tirages de bits successifs.

Ainsi, le taux d'entropie quantifie l'aléatoire de chaque bit généré à chaque tirage, lorsque le générateur de nombre(s) aléatoire(s) est en fonctionnement et qu'il génère les bits à la fréquence prédéfinie.

Ainsi, le taux d'entropie est une valeur comprise entre zéro et un. L'unité du taux d'entropie est le bit d'entropie par bit généré. Si le taux d'entropie est proche de zéro, alors chaque bit généré est déterministe et la suite de tirages est facilement déterminable. A l'inverse, si le taux d'entropie est proche de un, alors chaque bit généré est imprévisible et la suite de tirages est difficilement déterminable. Le taux d'entropie dépend de la modélisation stochastique qui donne un sens aux probabilités d'occurrence des motifs $X = (S_1, S_2, \ldots, S_D)$. Il est en pratique dans l'état de l'art difficile à calculer ou estimer, quand le modèle stochastique introduit notamment des dépendances entre les bits extraits successivement des oscillateurs à anneaux, et de surcroit sur des modèles de source d'aléa combinant plusieurs oscillateurs à anneaux.

Pour certaines applications, telles que celles décrites dans la norme AIS 31 du BSI (de l'allemand, *Bundesamt für Sicherheit in der Informationstechnik*), les exigences portant sur ces sources d'aléa sont renforcées en rendant obligatoire, pour le plus haut niveau de sécurité, la justification de la véritable imprédictibilité des échantillons générés.

La preuve de ce caractère imprédictible était auparavant définie uniquement par des tests statistiques des bit(s) produits en sortie du générateur de nombre(s) aléatoires.

Cette preuve requiert dorénavant une modélisation stochastique du fonctionnement interne du générateur de nombre(s) aléatoire(s) et une preuve que le taux d'entropie par bit généré dans le modèle stochastique est supérieur à un seuil imposé (0,997 bit d'entropie par bit dans le standard AIS 31).

Dans l'état de l'art actuel, de nombreuses sources d'aléa physiques embarquées en technologie hardware FPGA ou ASIC exploitent le jitter de signaux d'horloge produits par des oscillateurs à anneaux. Pour ce type de sources, plusieurs modélisations stochastiques sont envisagées. Une première modélisation « simple » considère les bits échantillonnés comme indépendants et applique un modèle gaussien sur la variable physique échantillonnée à chaque tirage. La preuve de sécurité pour ces modèles rudimentaires s'avère insuffisante pour une évaluation de haut niveau car :

- la variance mesurée expérimentalement (permettant de paramétrer le modèle) résulte en fait de l'action de plusieurs sources physiques de bruits combinées difficilement séparables, certaines non modélisées et potentiellement manipulables par un attaquant, et
- l'hypothèse d'indépendance des échantillons successivement produits n'est pas justifiée ni démontrée.

Une modélisation plus aboutie, est celle de l'article « On the security of oscillator-based random number generators" de Matthieu Baudet, David Lubicz, Julien Micolod, et André Tassiaux. Cet article introduit, pour une source d'aléa à base d'oscillateurs, un modèle stochastique de l'évolution de la phase des signaux d'horloge générés sous la forme d'un processus de Wiener. La source de bruit prise en compte par ce modèle est uniquement le bruit « blanc » issue de l'agitation thermique électronique qui perturbe localement le signal d'horloge de l'oscillateur. Or, ce bruit n'est pas manipulable par un attaquant, et est par nature indépendant de toutes les autres sources de bruits. De plus, ce modèle ne suppose pas que les bits extraits successivement sont indépendants. Au contraire, il décrit l'évolution de la phase entre deux instants successifs. Cette évolution est ainsi modélisée comme la somme de deux termes : un premier terme déterministe qui traduit l'évolution moyenne caractérisée par la période du signal d'horloge généré par l'oscillateur, et un second terme issu du bruit thermique correspondant à un saut aléatoire « gaussien » dont la variance est proportionnelle à la durée.

Seule cette seconde modélisation, que nous nommons modélisation « thermique » dans la suite du document, permet d'apporter une preuve compatible du plus haut niveau de sécurité.

En pratique, une source d'aléa complète combine plusieurs oscillateurs. En particulier, ceci permet : en premier lieu d'augmenter la quantité d'entropie capturée à chaque instant et donc d'augmenter le débit d'échantillons en sortie ; et par ailleurs de tenir compte d'une « marge de sécurité » en supposant par principe que certaines sources élémentaires sont possiblement « en panne » et ne contribuent pas à l'entropie (afin de tenir compte de phénomènes physiques exceptionnels - métastabilité dans le processus d'échantillonnage, SEU, au autre qui ne sont pas directement pris en compte dans le modèle stochastique).

La méthodologie de preuve sur ces modèles repose sur trois piliers : la définition du modèle stochastique « thermique », un processus expérimental permettant d'estimer les paramètres du modèle « thermique », et une méthode permettant de caractériser le taux d'entropie en fonction des paramètres du modèle « thermique ».

On connait de l'article « On the security of oscillator-based random number generators" de Matthieu Baudet, David Lubicz, Julien Micolod, et André Tassiaux, le modèle stochastique « thermique », sous forme de processus de Wiener bien établi utilisable pour chaque oscillateur à anneau, et gouverné plus précisément par 3trois paramètres spécifiques de chaque oscillateur :

- le rapport cyclique du signal d'horloge produit par l'oscillateur (qui caractérise l'écart possible entre la durée où le signal d'horloge atteint son amplitude haute, et celle où il est en position basse)
- la dérive qui caractérise la période moyenne du signal d'horloge produit par l'oscillateur
- la volatilité qui caractérise la variance de la phase proportionnelle à la durée entre 2 acquisitions.

Un quatrième paramètre commun à tous les oscillateurs est la fréquence d'échantillonnage des signaux d'horloge produit par les oscillateurs, qui fixe la durée entre deux acquisitions.

En outre, on connait de l'article « Towards an oscillator based TRNG with a certified entropy rate », de David Lubicz et Nathalie Bochard, une méthode d'estimation expérimentale des paramètres précités spécifiques à chaque oscillateur.

Concernant la caractérisation du taux d'entropie, dans l'état de l'art de la modélisation « thermique », seul le cas de la combinaison des sources élémentaires par une fonction XOR binaire est envisagé. Autrement dit la fonction ne fournit qu'un seul bit de sortie par échantillonnage. Avec ce modèle stochastique il est en effet difficile de déduire un seuil d'entropie si la source utilise une fonction quelconque pour combiner les bits unitaires issus des différentes sources élémentaires.

Ceci est d'autant plus vrai si la source combine les bits issus des différentes sources en un vecteur composé de plusieurs bits en sortie, plutôt qu'en un unique bit (c'est-à-dire si la fonction de combinaisons prend L bits en entrée - issus de L sources élémentaires - pour dériver un vecteur de k bits en sorties). Or, l'utilisation d'une fonction XOR pour recombiner les flux binaires des sources élémentaires devient peu efficace dès que le nombre de sources élémentaires combinées augmente. La quantité d'entropie « prouvée » sur le bit en sortie est alors bien inférieure à la somme des entropies prouvées pour chaque source élémentaire (et de toute façon nécessairement inférieure à 1 quel que soit le nombre de sources élémentaires en entrée). Beaucoup d'entropie disponible en amont de la fonction de combinaison est ainsi « gaspillée », ce qui limite les performances.

Ainsi, les articles précités sont en mesure de quantifier l'entropie associée à un générateur de nombre(s) aléatoire(s), seulement dans un cas particulier où la fonction de composition est une fonction XOR qui ne fournit qu'un seul bit à chaque échantillonnage. Or, l'utilisation d'une telle fonction est très limitée. D'autres fonctions de recombinaisons permettraient d'obtenir des sources d'aléa plus performantes, mais elles ne sont pas modélisées à ce jour et ne permettent donc pas d'apporter la preuve de sécurité attendue.

Il est donc particulièrement difficile de réussir à concevoir un générateur de nombre(s) aléatoire(s) combinant plusieurs oscillateurs qui soit qualifié pour le respect d'un seuil du taux d'entropie $\tau$ lorsque la fonction de composition est notamment vectorielle, c'est à dire lorsqu'une sortie de la fonction de composition forme un vecteur bits. Autrement dit, les méthodes de l'art antérieur ne s'appliquent pas à la conception d'un générateur de nombre(s) aléatoire(s) dans lequel la fonction de composition fournit en sa sortie plusieurs bits à chaque période d'échantillonnage.

A cet effet, l'invention a pour objet un procédé de qualification d'un générateur de nombre(s) aléatoire(s) pour le respect d'un seuil prédéfini de taux d'entropie, le générateur de nombre(s) aléatoire(s) comprenant :

- un nombre d'oscillateurs à anneau, chacun générant un signal créneau,
- un module d'acquisition d'une valeur du signal créneau de chaque oscillateur à anneau suivant une fréquence d'acquisition, et
- un module de composition connecté au module d'acquisition et propre à fournir, depuis les valeurs acquises des signaux créneaux, un vecteur de bits formant le nombre aléatoire, par application auxdites valeurs d'une fonction de composition,

le taux d'entropie du générateur de nombre(s) aléatoire(s) étant la limite, quand un nombre de générations de vecteurs de bits tend vers l'infini, d'un rapport entre l'entropie de Shannon par bit d'une suite des vecteurs de bits successivement généré, et le nombre de générations successives,
le procédé étant mis en œuvre par un dispositif électronique de qualification et comprenant les étapes suivantes :

- réception du nombre d'oscillateurs à anneau compris dans le générateur de nombre(s) aléatoire(s), de la fonction de composition, de la fréquence d'acquisition de la valeur du signal créneau de chaque oscillateur à anneau, d'au moins un paramètre intrinsèque à chaque oscillateur à anneau et du seuil prédéfini de taux d'entropie,
- pour chaque oscillateur à anneau, détermination d'un majorant d'un biais à partir du ou des paramètres intrinsèques à l'oscillateur à anneau et de la fréquence d'acquisition,
- estimation d'un minorant du taux d'entropie du générateur de nombre(s) aléatoire(s) à partir du nombre d'oscillateurs à anneau reçu, de la fonction de composition reçue et de chaque majorant de biais déterminé,
- comparaison du minorant estimé au seuil prédéfini de taux d'entropie, et
- qualification du générateur de nombre(s) aléatoire(s) uniquement si le minorant estimé est supérieur au seuil prédéfini de taux d'entropie.

Avec le procédé selon l'invention, l'estimation du minorant de taux d'entropie garantit un taux d'entropie du générateur supérieur au minorant estimé qui est lui-même supérieur au seuil prédéfini de taux d'entropie.

Suivant des modes de réalisation particuliers, le procédé comprend une ou plusieurs des caractéristiques suivantes, prise(s) isolément ou suivant toutes les combinaisons techniquement possibles :

- pour chaque oscillateur à anneau, les paramètres intrinsèques sont représentatifs d'un modèle stochastique thermique dans chaque oscillateur à anneau et comprennent : un rapport cyclique du signal créneau de chaque oscillateur à anneau et une volatilité du modèle thermique de l'oscillateur à anneau,
- la fonction de composition est une fonction linéaire des valeurs acquises des signaux créneaux,

- la fonction de composition est un code correcteur linéaire caractérisé par une longueur égale au nombre d'oscillateurs à anneau, une dimension égale au nombre de bits dans le vecteur de bits et une distance minimale prédéfinie,
- l'étape d'estimation comprend :

une détermination d'un majorant d'un biais en sortie de la fonction de composition du générateur de nombre(s) aléatoire(s) à partir des majorants du biais de chaque oscillateur à anneau, et
une estimation du minorant du taux d'entropie du générateur de nombre(s) aléatoire(s) selon l'équation suivante :

$$H_{min} = \frac{1}{k}\left(k - \frac{(2^k - 1)B_F^2}{2\ln(2)} - \Delta\left((2^k - 1)B_F\right)\right)$$

où ln() est le logarithme népérien, et

$$\Delta(B_F) = \frac{1}{\ln(2)}\left((1 - B_F)\ln(1 - B_F) + B_F - \frac{B_F^2}{2}\right),$$

- lors l'étape d'estimation, le majorant du biais en sortie de la fonction de composition est égal au produit des majorants des biais de chaque oscillateur à anneau, et
- l'étape de réception comprend la réception d'une marge quantifiant un nombre d'oscillateur(s) à anneau dont une contribution au minorant estimé est nulle,

lors de l'étape d'estimation, le minorant de taux d'entropie est estimé en outre à partir de la marge.

L'invention a également pour objet un produit programme d'ordinateur comprenant des instructions logicielles qui, lorsqu'elles sont exécutées par un ordinateur, mettent en œuvre un procédé de qualification tel que décrit ci-dessus.

L'invention a également pour objet un procédé de conception d'un générateur de nombre(s) aléatoire(s) comprenant :

- un nombre d'oscillateurs à anneau, chacun générant un signal créneau,
- un module d'acquisition d'une valeur du signal créneau de chaque oscillateur à anneau suivant une fréquence d'acquisition, et
- un module de composition connecté au module d'acquisition et propre à fournir, depuis les valeurs acquises des signaux créneaux, un vecteur de bits formant le nombre aléatoire, par application auxdites valeurs d'une fonction de composition,

le taux d'entropie du générateur de nombre(s) aléatoire(s) étant la limite, quand un nombre de générations de vecteurs de bits tend vers l'infini, d'un rapport entre l'entropie de Shannon par bit d'une suite des vecteurs de bits successivement généré, et le nombre de générations successives,
le procédé comprenant les étapes suivantes :

- réception du nombre d'oscillateurs à anneau, de la fonction de composition et d'au moins un paramètre intrinsèque à chaque oscillateur à anneau,
- initialisation d'une valeur de la fréquence d'acquisition,
- qualification du générateur de nombre(s) aléatoire(s) par un procédé de qualification tel que décrit plus haut, à partir du nombre d'oscillateurs à anneau, de la fonction composition comprenant les coefficients réglables, le(s) paramètre(s) intrinsèque(s), et de la valeur de la fréquence d'acquisition,

tant que le générateur de nombre(s) aléatoire(s) n'est pas qualifié lors de l'étape de qualification, le procédé comprend en outre les étapes suivantes :

- modification de la fréquence d'acquisition et de préférence de la fonction de composition, et réitération de l'étape de qualification.

L'invention a également pour objet un dispositif électronique de qualification électronique de qualification d'un générateur de nombre(s) aléatoire(s) pour le respect d'un seuil prédéfini de taux d'entropie, le générateur de nombre(s) aléatoire(s) comprenant :

- un nombre d'oscillateurs à anneau, chacun générant un signal créneau,
- un module d'acquisition d'une valeur du signal créneau de chaque oscillateur à anneau suivant une fréquence d'acquisition, et
- un module de composition connecté au module d'acquisition et propre à fournir, depuis les valeurs acquises des signaux créneaux, un vecteur de bits formant le nombre aléatoire, par application auxdites valeurs d'une fonction de composition,

le taux d'entropie du générateur de nombre(s) aléatoire(s) étant la limite, quand un nombre de générations de vecteurs de bits tend vers l'infini, d'un rapport entre l'entropie de Shannon par bit d'une suite des vecteurs de bits successivement généré, et le nombre de générations successives,
le dispositif électronique de qualification comprenant :

- un module d'entrée propre à recevoir le nombre d'oscillateurs à anneau compris dans le générateur de nombre(s) aléatoire(s), la fonction de composition, la fréquence d'acquisition de la valeur du signal créneau de chaque oscillateur à anneau, au moins un paramètre intrinsèque à chaque oscillateur à anneau, et le seuil prédéfini de taux d'entropie,
- un module de calcul propre à déterminer, pour chaque oscillateur à anneau, un majorant d'un biais à partir du ou des paramètres intrinsèques à l'oscillateur à anneau et à partir de la fréquence d'acquisition,
le module de calcul étant en outre propre à estimer le minorant du taux d'entropie du générateur de nombre(s) aléatoire(s) à partir du nombre acquis d'oscillateurs à anneau, de la fonction de composition acquise et de chaque majorant de biais déterminé,
- un module de comparaison du minorant estimé au seuil prédéfini de taux d'entropie, et
- un module de sortie propre à qualifier le générateur de nombre(s) aléatoire(s) uniquement si le minorant estimé est supérieur au seuil prédéfini de taux d'entropie.

Ces caractéristiques et avantages de l'invention apparaitront plus clairement à la lecture de la description qui va suivre, donnée uniquement à titre d'exemple non-limitatif, et faite en référence aux dessins annexés, sur lesquels :

[Fig 1] la figure 1 est une représentation schématique d'un générateur de nombre(s) aléatoire(s) ;
[Fig 2] la figure 2 est une représentation schématique d'un dispositif électronique de qualification du générateur de nombre(s) aléatoire(s) de la figure 1 ;
[Fig 3] la figure 3 est un organigramme d'un procédé de qualification du générateur de nombre(s) aléatoire(s) de la figure 1 ; et
[Fig 4] la figure 4 est un organigramme d'un procédé de conception du générateur de nombre(s) aléatoire(s) de la figure 1.

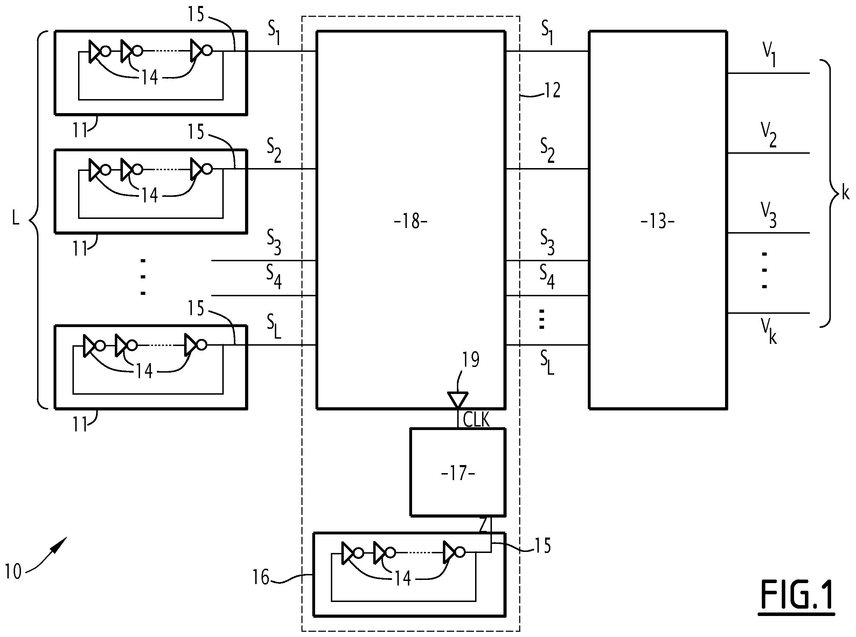

On décrit en référence à la figure 1, un générateur de nombre(s) aléatoire(s) 10. Le générateur de nombre(s) aléatoire(s) 10 est par exemple un dispositif électronique propre à être intégré à une carte électronique et embarqué dans un système électronique tel qu'un système électronique de cryptographie.

Le générateur de nombre(s) aléatoire(s) 10 comprend un nombre L d'oscillateurs à anneau 11 (de l'anglais *ring oscillator*), un module d'acquisition 12 connecté aux L oscillateurs à anneau 11, et un module de composition 13 connecté aux sorties du module d'acquisition 13.

Le générateur de nombre(s) aléatoire(s) 10, aussi appelé générateur 10, est propre à générer, depuis les L oscillateurs à anneau 11, un vecteur de k bits V formant le nombre aléatoire et comprenant k bits $V_i$.

Le nombre L d'oscillateurs à anneau 11 est par exemple compris entre seize et cent vingt-huit. Ce nombre L dépend de l'application du générateur de nombre(s) aléatoire(s) 10 et de contraintes de volume, de poids, et/ou de puissance électrique associées à l'application.

Chaque oscillateur à anneau 11 est un circuit électronique logique comprenant un nombre impair de portes logiques 14 dont une fonction logique est « NON » (de l'anglais, *Not gate*). Les portes logiques 14 sont connectées les unes aux autres formant une boucle de connexion. Préférentiellement, chaque oscillateur à anneau 11 comprend trois, cinq ou sept portes de fonction logique « NON ».

Un point de sortie 15 est défini entre deux portes logiques. Le point de sortie 15 est connecté à une entrée du module d'acquisition 12. Chaque oscillateur à anneau 11 comprenant un nombre impair de porte logique « NON », la valeur du signal $S_i$ au point de sortie 15 oscille entre un potentiel haut correspondant à une valeur de bit égale à un, et un potentiel bas correspondant à une valeur de bit égale à zéro. Ainsi, le signal $S_i$ au point de sortie 15 est un signal créneau ayant une période propre $T_i$ et un rapport cyclique $\alpha_i$, par exemple déterminés expérimentalement.

Le module d'acquisition 12 comprend un oscillateur 16 connecté à un compteur 17, lui-même connecté à une bascule 18.

L'oscillateur 16 est par exemple un oscillateur à anneau comportant une pluralité de portes logiques 14 et un point de sortie 15. De même que pour les oscillateurs à anneau 11, le signal Z au point de sortie 15 de l'oscillateur 16 est un signal créneau de période propre T. Ainsi, le signal Z comprend un front montant après chaque expiration d'une durée égale à la période propre T.

Le compteur 17 est connecté au point de sortie 15 de l'oscillateur 16, recevant ainsi le signal Z. Le compteur 17 est en outre connecté à une entrée d'horloge 19 de la bascule 18. Le compteur 17 est propre à incrémenter une valeur de compteur à chaque fois que le signal Z comprend un front montant. Le compteur 17 est en outre propre à fournir un signal d'horloge CLK comprenant un front montant lorsque le compteur atteint une valeur prédéfinie N. Lorsque le signal d'horloge CLK comprend un front montant, le compteur 17 réinitialise la valeur du compteur à zéro.

La bascule 18 est par exemple une bascule D (pour Data). La bascule 15 comprend L entrées de données connectées aux points de sortie 15 des L oscillateurs à anneau 11. La bascule comprend en outre l'entrée d'horloge 19 connectée au compteur 17. La bascule 15 comprend en outre L sorties de données connectées au module de composition 14. Chaque sortie de données est donc associée à une entrée de données respective.

Lorsque la bascule 18 reçoit le front montant du signal d'horloge CLK via son entrée d'horloge 19, la bascule 18 acquière, via ses entrées de données, les valeurs $S_i$ des signaux aux points de sortie 15 de chacun des L oscillateurs à anneau 11. La bascule 18 maintient à chacune de ses sorties de données, la valeur acquise par l'entrée de donnée associée, jusqu'à ce que le signal d'horloge CLK comprenne un nouveau front montant.

On comprend alors que le module d'acquisition 12 acquière les valeurs des signaux $S_i$ aux points de sortie 15 de chaque oscillateur à anneau 11 à chaque expiration du délai $\Delta T = NT$, où N un la valeur prédéfinie du compteur 17. Autrement dit, une fréquence d'acquisition $f_{acq}$ du module d'acquisition 12 est égale à l'inverse du délai $\Delta T$.

Le module de composition 13 est connecté aux sorties de données de la bascule 18 et est propre à recevoir les valeurs maintenues $S_i$ par la bascule 18 pendant la durée égale à $\Delta T$. Le module de composition 13 implémente une fonction de composition F propre à convertir les L valeurs reçues par ses entrées, en un vecteur V de bits comprenant k bits $V_i$.

On entend par « vecteur de bits » une pluralité de valeurs de bits $V_i$ réunies sous forme d'une ligne ou d'une colonne. Chaque composante $V_i$ du vecteur de bits V est soit égal à zéro, soit à un.

Le nombre k de bits du vecteur de bits est par exemple compris entre deux et soixante-quatre.

La fonction de composition F est une fonction booléenne propre à convertir les L bits d'entrée $S_i$ en le vecteur de bits V comprenant k composantes $V_i$.

Par exemple, la fonction de composition F est une fonction linéaire connue en soi. Ainsi, chaque bit $V_i$ du vecteur de bits V en sortie du module de composition 13 est une combinaison linéaire des L bits en entrée du module de composition $S_i$. La fonction F est par exemple formulable sont la forme suivante :

[MATH 2]

$$V = F(S_1, \ldots, S_L) = f[S_1, \ldots, S_L]$$

où $f$ est une matrice comprenant une pluralité de lignes, une pluralité de colonnes et un coefficients C pour chaque ligne et chaque colonne.

Les coefficients C sont réglables. On entend par « réglables » le fait qu'une valeur est affectable à chaque coefficient C.

En variante encore, la fonction de composition F est un code correcteur linéaire, aussi appelé code linéaire. De manière connue en soi, le code linéaire est caractérisé par une longueur, une dimension et une distance minimale d.

La longueur du code linéaire est, dans le cas d'espèce, égale au nombre L d'oscillateurs à anneau 11 du générateur 10. La dimension du code linéaire est dans le cas d'espèce égale au nombre k de bits $V_i$ dans le vecteur de bits V. La distance minimale d est une grandeur prédéfinie inférieure ou égale au nombre L d'oscillateurs à anneau 11. La dimension minimale d assure que chaque bit $V_i$ du vecteur de bits V est une combinaison d'au moins d bits $S_i$ en entrée du module de composition 13.

Si la fonction de composition F est un code linéaire, la fonction F est alors construite à partir d'une matrice génératrice de sorte à ce que chaque composante du vecteur de bits V soit une somme des L bits admis en entrée de la fonction, pondérés par des coefficients de la matrice génératrice.

Le module de composition 13 est par exemple connecté à un autre dispositif électronique non représenté. Le module de composition 13 fournit à ce dispositif le vecteur de bits V à la fréquence d'acquisition $f_{acq}$.

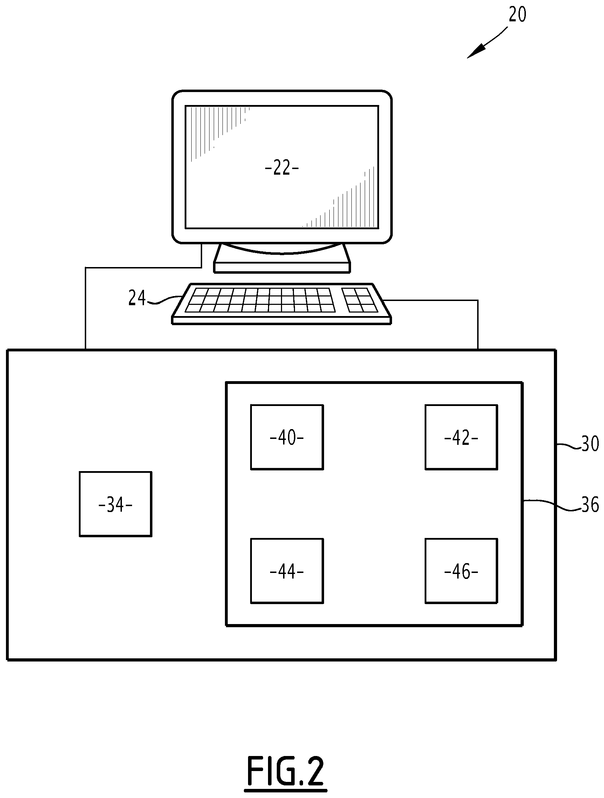

En référence à la figure 2, on décrit un dispositif électronique de qualification 20 du générateur de nombre(s) aléatoire(s) 10 pour le respect d'un seuil de taux d'entropie prédéfini $H_{cible}$. Le seuil de taux d'entropie $H_{cible}$ est prédéterminé, par exemple égal à 0,997.

Le dispositif électronique de qualification 20 est par exemple un ordinateur mettant en œuvre un programme décrit ci-dessous.

Sur l'exemple de la figure 2, le dispositif électronique de qualification 20 comprend une unité d'affichage 22, au moins un périphérique 24, et une unité de traitement 30. L'unité d'affichage 22 est connectée à l'unité de traitement 30.

L'unité d'affichage 22 est par exemple un moniteur d'ordinateur propre à afficher, à destination d'un utilisateur, des informations issues de l'unité de traitement 30.

Le périphérique 24 comprend par exemple un clavier et/ou une souris pour permettre à un utilisateur d'interagir avec le dispositif électronique de qualification 20.

L'unité de traitement 30 comprend un processeur 34 connecté à une mémoire 36. La mémoire 36 stocke préférentiellement un produit programme d'ordinateur comprenant une pluralité de logiciels 40, 42, 44, 46, aussi appelés modules, ou briques logicielles. Ces logiciels comprennent des instructions logicielles qui, lorsqu'elles sont exécutées par le processeur 34 mettent en œuvre un procédé 100 de qualification du générateur de nombre(s) aléatoire(s).

Plus spécifiquement, la mémoire 36 stocke un module d'entrée 40 configuré pour recevoir, depuis l'utilisateur des informations sur le générateur 10 qui seront décrites ci-après. La mémoire 36 stocke également un module de calcul 42 propre à estimer un minorant $H_{min}$ du taux d'entropie $\tau$ du générateur 10 à partir des informations reçues par le module d'entrée 40. En outre, la mémoire 36 stocke un module de comparaison 44 propre à comparer le minorant estimé $H_{min}$ avec un seuil $H_{cible}$ de taux d'entropie $\tau$ et un module de sortie 46 propre à qualifier le générateur 10 uniquement si le minorant $H_{min}$ est supérieur au seuil de taux d'entropie $H_{cible}$.

En variante, les modules d'entrée 40, de calcul 42, de comparaison 44 et de sortie 46 sont stockés sur un support d'information non représenté. Le support d'information est un support lisible par un ordinateur. Le support lisible d'information est un medium adapté à mémoriser des instructions électroniques et capable d'être couplé à un bus d'un système informatique.

A titre d'exemple, le support d'information est un disque optique, un CD-ROM, un disque magnéto-optique, une mémoire ROM, une mémoire RAM, une mémoire EPROM, une mémoire EEPROM, une carte magnétique, une carte optique ou une clé USB.

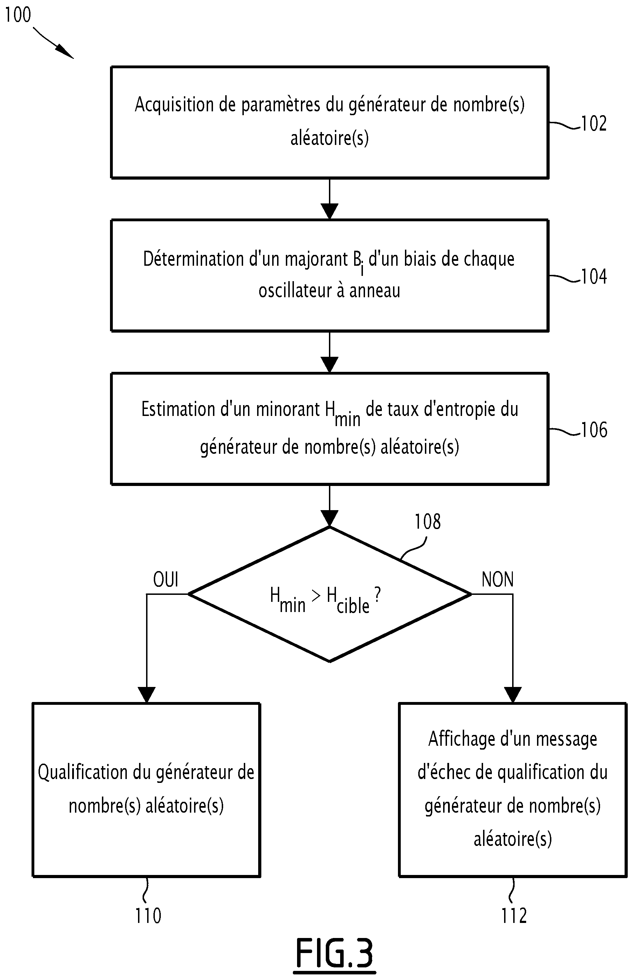

Le fonctionnement du dispositif électronique de qualification 20 va maintenant être décrit en référence à la figure 3 représentant un organigramme du procédé 100 de qualification du générateur de nombre(s) aléatoire(s) 10 pour le respect du seuil de taux d'entropie prédéfini $H_{cible}$.

Selon un premier mode de réalisation, le signal en sortie $S_i$ de chaque oscillateur à anneau 11 comporte une partie aléatoire modélisée par un modèle thermique dû à une agitation thermique d'électrons à l'intérieur dudit oscillateur à anneau 11.

Selon ce modèle, à chaque tirage j, le signal de sortie a par exemple pour valeur :

[MATH 3]

$$S_i(j) = R[\alpha_i](\varphi_i(T_0 + j\Delta T)\,mod\,1)$$

où $R[\alpha_i]$ est la fonction créneau sur l'intervalle [0 ; 1[ qui vaut 0 sur l'intervalle [0 ; $\alpha_i$[ et qui vaut 1 sur l'intervalle ]$\alpha_i$ ; 1[, $\varphi_i(T_0 + j\Delta T)$ est la phase relative entre ledit oscillateur à anneau 11 et l'oscillateur 16 du module d'acquisition 12, lors de la j-ième acquisition après un instant initial $T_0$, et *mod* 1 est la fonction de congruence modulo 1.

On comprend alors que le signal de sortie $S_i$ comprend un biais compris entre -1 et 1 et dont une valeur est égale à $2\alpha_i$ - 1.

La partie aléatoire dans le signal de sortie $S_i$ de chaque oscillateur à anneau 11 provient donc de la phase relative $\varphi_i(\ )$.

Il est supposé que la phase relative $\varphi_i(T_0)$ à l'instant initial $T_0$ suit une loi uniforme de probabilité.

En outre, le modèle thermique inclut de considérer que chaque phase relative $\varphi_i(\ )$ suit un processus de Wiener de paramètres : la dérive $\mu_i$ du modèle thermique, et la volatilité du modèle thermique $\sigma_i^2$. Ainsi le signal $S_i$ en sortie de chaque oscillateur à anneau 11 dépend des deux paramètres $\mu_i$, $\sigma_i^2$ du processus de Wiener, du rapport cyclique $\alpha_i$ du signal créneau et de la période d'acquisition $\Delta T$, i.e. de la fréquence d'acquisition $f_{acq}$.

Selon le modèle thermique, pour chaque oscillateur à anneau 11, la valeur du signal de sortie $S_i$ au j+1-ième tirage sachant la valeur de la phase $\varphi_i(\ )$ au j-ème tirage s'exprime par exemple selon l'équation suivante :

[MATH 4]

$$\boldsymbol{S_i} = S_i(j + 1|\varphi_i(T_0 + j\Delta T) = x_i) = R[\alpha_i]\big((x_i^* + \boldsymbol{g_i})mod\,1\big)$$

où $x_i^*$ est la valeur moyenne de la phase relative $\varphi_i(T_0 + j\Delta T)$ à l'instant $T_0 + j\Delta T$, qui est égal à $S_i(j) + \mu_i\Delta T$, et

$g_i$ est une variable aléatoire suivant la loi normale centrée et d'écart-type $\sigma_i \sqrt{\Delta T}$.

Ainsi, la valeur du signal de sortie S$_i$ au j+1-ième tirage sachant la valeur de la phase $\varphi_i($ ) au j-ème tirage suit une loi de Bernoulli caractérisé par un biais $\varepsilon_i$ qui dépend de la valeur de la phase $\varphi_i($ ) au j-ème tirage, par exemple selon l'équation suivante :

[MATH 5]

$$\epsilon_i = P(\boldsymbol{S_i} = 0) - P(\boldsymbol{S_i} = 1) = E\big((-1)^{\boldsymbol{S_i}}\big)$$

où $P(\boldsymbol{S_i} = 0)$ est la probabilité que la valeur $x_i$ du signal de sortie S$_i$ au j+1-ième tirage soit égale à zéro, sachant la valeur de la phase $\varphi_i($ ), et
$P(\boldsymbol{S_i} = 1)$ est la probabilité que la valeur $x_i$ du signal de sortie S$_i$ au j+1-ième tirage soit égale à un, sachant la valeur de la phase $\varphi_i($ ) au j-ème tirage.

On remarque alors que le biais $\varepsilon_i$ de chaque oscillateur à anneau 11 dépend de la valeur $x_i$ de la phase $\varphi_i($ ) au j-ème tirage.
Il existe donc une borne $|\varepsilon_i|$ du biais $\varepsilon_i$ en valeur absolue, indépendante de la valeur $x_i$ de la phase $\varphi_i($ ). En effet, lorsque le rapport cyclique $\alpha_i$ est strictement supérieur à $\frac{1}{2}$, respectivement lorsque $1 - \alpha_i > \frac{1}{2}$, la valeur $x_i$ de la phase $\varphi_i($ ) qui maximise la valeur absolue du biais $|\varepsilon(x_i)|$ est celle qui induit une valeur moyenne de la phase $x_i^* = x_i + \mu_i \Delta T$ au milieu de l'intervalle de phase sur [0,1] qui produit 0 (respectivement 1).
Initialement, lors d'une étape de réception 102, le module d'entrée 40 reçoit les informations du générateur 10, à savoir : le nombre L d'oscillateurs à anneau 11 compris dans le générateur 10, la fonction de composition F, la fréquence d'acquisition $f_{acq} = \frac{1}{\Delta T}$, des paramètres intrinsèques à chaque oscillateur à anneau 11 et le seuil de taux d'entropie H$_{cible}$, et optionnellement une marge M.
Dans ce premier mode de réalisation, les paramètres intrinsèques à chaque oscillateur à anneau 11 sont préférentiellement : le rapport cyclique $\alpha_i$, et la volatilité de phase $\sigma_i$ du modèle thermique définis précédemment.
La marge M est un nombre d'oscillateurs à anneau 11 ne contribuant pas à l'entropie du générateur 10. Ainsi, la marge M permet de prendre en compte des oscillateurs à anneau défectueux ou faisant apparaître des phénomènes de métastabilité.
Puis, lors d'une étape de détermination 104, pour chaque oscillateur à anneau 11, le module de calcul 42 détermine un majorant Bi du biais $\varepsilon_i$, qui est indépendant de la valeur de la phase au j-ème tirage, à partir de la fréquence d'acquisition f$_{acq}$ et des paramètres intrinsèques à l'oscillateur à anneau 11, à savoir le rapport cyclique $\alpha_i$ et de la volatilité $\sigma_i$. Il est clair que le biais Bi dépend alors du modèle thermique considéré dans ce premier mode de réalisation.
Le module de calcul 42 calcule par exemple chaque majorant B$_i$ du biais $\varepsilon_i$ selon les équations suivantes :

[MATH 6]

$$\theta_0 = 0;$$
$$\theta_1 = \frac{\max(\alpha_i, 1 - \alpha_i)}{2};$$
$$\theta_2 = 1 - \frac{\max(\alpha_i, 1 - \alpha_i)}{2};$$
$$\theta_3 = 1$$

$$B_i = 2 \sum_{j \geq 0} \left( D\left( \frac{\theta_3 + j}{\sigma_i \sqrt{\frac{1}{f_{acq}}}} \right) - 2D\left( \frac{\theta_2 + j}{\sigma_i \sqrt{\frac{1}{f_{acq}}}} \right) + 2D\left( \frac{\theta_1 + j}{\sigma_i \sqrt{\frac{1}{f_{acq}}}} \right) - D\left( \frac{\theta_0 + j}{\sigma_i \sqrt{\frac{1}{f_{acq}}}} \right) \right)$$

où $\sum_{j \geq 0}$ désigne la somme pour tous les entiers $j$ positifs ou nuls, et

$D(\ )$ est la fonction de répartition de la loi normale centrée réduite.

De préférence, si les oscillateurs à anneau 11 sont tous similaires entre eux, les majorant $B_i$ des biais $\varepsilon_i$ de chaque oscillateur à anneau 11 sont égaux.

Puis, lors d'une étape d'estimation 106, le module de calcul 42 estime un minorant $H_{min}$ du taux d'entropie $\tau$ du générateur 10, à partir de chaque bais $B_i$ calculé, du nombre L d'oscillateurs à anneau 11 dans le générateur 10, et de la fonction de composition F.

A cet effet, le module de calcul 42 détermine pour chaque combinaison linéaire de bits de sortie de F (i.e. a.F(x) = <a | F(x)>), premièrement un majorant $B_{a.F}$ du biais en cette composante en sortie de la fonction de composition F du générateur 10, par exemple selon l'équation suivante :

[MATH 7]

$$B_{aF} = \frac{1}{2^L} \sum_{w=(w_1,\ldots,w_L)\in\{0,1\}^L} \left( |\hat{F}(a,w)| \prod_{i=1}^{L} B_i^{w_i} \right)$$

où $\sum_{w=(w_1,\ldots,w_L)\in\{0,1\}^L}$ est la somme sur tous les vecteurs $w$ de L bits,
$\hat{F}(\alpha, w)$ désigne la transformée de Walsh de $(-1)^{a.F}$ au point w évaluée suivant l'équation :

[MATH 8]

$$\forall a \in \{0,1\}^k, \forall w \in \{0,1\}^L \quad \hat{F}(a,w) = \sum_{x\in\{0,1\}^L} (-1)^{a.F(x)+w.x}$$

$| \ |$ est la fonction valeur absolue,

$\prod_{i=1}^{L}$ est le produit pour un indice i allant de 1 à L, et

$B_i^{w_i}$ est égal à $B_i$ si le bit $w_i$ vaut 1 ou est égal à 1 si le bit $w_i$ vaut 0.

Le module de calcul 42 détermine alors à l'aide des quantités $B_{a.F}$, un majorant $B_F$ des biais en sortie de F, valable pour toute composante a, suivant le calcul :

[MATH 9]

$$B_F = Max(B_{a.F})_{a\in\{0,1\}^k \setminus \{0\}}$$

Toujours lors de l'étape d'estimation 106, pour chaque oscillateur à anneau 11, le module de calcul 42 calcule des coefficients, de préférence trois coefficients notés $A_i(0)$, $A_i(1)$, $A_i(2)$, à partir des équations suivantes :

[MATH 10]

$$A_i(0) = 1$$
$$A_i(1) = 2\alpha_i - 1$$
$$A_i(2) = \int_0^1 \gamma_i(y)^2 dy$$

où pour tout y, $\gamma_i(y) = \int_0^1 G_i(x)(-1)^{R[\alpha_i]((x-y)\bmod 1)}dx$ , avec $G_i(x) = \sum_{j\in Z} g[\sigma_i^2\Delta T](x+y)$ dans

lequel $g[\sigma_i^2\Delta T]()$ est une distribution Gaussienne centrée d'écart type $\sigma_i\sqrt{\Delta T}$ . $\varepsilon_{a.F}(x_1,x_2,\ldots,x_L)$ désigne le biais de la variable aléatoire correspondant à la combinaison linéaire *a.F* des bits en sortie de F, sachant les phases $\varphi_i(t_0 +$

*jT) = x$_i$, 1 ≤ i ≤ L*

*A(x$_1$,x$_2$,...,x$_L$) = Σ$_{a∈\{0,1\}^k \setminus \{0\}}$ε$_{a.F}$(x$_1$,x$_2$,...,x$_L$)$^2$, et*

*A$^{moy}$ est la moyenne de A(x$_1$,x$_2$,...,x$_L$) sur le domaine des états [0,1]$^L$.*

Le module de calcul 42 calcule ensuite cette valeur moyenne *A$^{moy}$* par exemple selon l'équation suivante :

[MATH 11]

$$A^{moy} = \frac{1}{2^{2L}} \sum_{\substack{u=(u_1,...,u_L)\in\{0,1\}^L \\ v=(v_1,...,v_L)\in\{0,1\}^L \\ a\in\{0,1\}^k \setminus \{0\}}} \left( \hat{Q}(a,u)\hat{Q}(a,v) \prod_{i=1}^{L}(A_i(u_i+v_i)) \right)$$

où $\sum_{\substack{u=(u_1,...,u_L)\in\{0,1\}^L \\ v=(v_1,...,v_L)\in\{0,1\}^L \\ a\in\{0,1\}^k \setminus \{0\}}}$ est la somme sur tous les vecteurs *u* de L bits, sur tous les vecteurs

*v* de L bits, et sur tous les vecteurs *a* de k bits différent du vecteur nul,

$\hat{Q}(a,u)$ est la transformée de Walsh de la fonction (-1)$^{a.F}$ évaluée pour le vecteur *u*,

$\hat{Q}(a,v)$ est la transformée de Walsh de la fonction (-1)$^{a.F}$ évaluée pour le vecteur *v*,

*u$_i$* est la i-ème composante du vecteur *u*, et

*v$_i$* est la i-ème composante du vecteur *v*.

Toujours lors de l'étape d'estimation 106, le module de calcul 42 estime ensuite le minorant de taux d'entropie H$_{min}$ à partir du majorant B$_F$ du biais en sortie de la fonction de composition F, du nombre k de bits dans le vecteur de bits V en sortie du module de composition 18 et de la valeur *A$^{moy}$,* par exemple selon l'équation suivante :

[MATH 12]

$$H_{min} = \frac{1}{k} \left( k - \frac{1}{2\ln(2)} A^{moy} - \Delta\left( (2^k - 1)B_F \right) \right)$$

Puis lors d'une étape de comparaison 108, le module de comparaison 44 compare le minorant H$_{min}$ estimé lors de l'étape d'estimation 106 avec le seuil de taux d'entropie H$_{cible}$.

Si le minorant estimé H$_{min}$ est supérieur au seuil H$_{cible}$ de taux d'entropie *τ*, alors lors d'une étape de qualification 110, le générateur 10 est qualifié. Par exemple le module de sortie 46 envoie, à destination de l'utilisateur du dispositif 20 et via l'unité d'affichage 22, un premier message indiquant que le taux d'entropie *τ* du générateur 10 est supérieur au seuil du taux d'entropie H$_{cible}$.

Sinon, lors d'une étape d'affichage 112, le module de sortie 46 envoie, à destination de l'utilisateur du dispositif 20 et via l'unité d'affichage 22, un deuxième message indiquant un échec de la qualification du générateur 10. L'utilisateur sait alors que le taux d'entropie *τ* du générateur 10 n'est pas garanti d'être supérieur au seuil de taux d'entropie H$_{cible}$.

Des variantes du procédé 100 de qualification vont maintenant être décrites.

Premièrement, des variantes du calcul du majorant B$_F$ du biais en sortie de la fonction de composition F, vont être décrites. Dans chaque variante, sauf mention contraire explicite, l'estimation du minorant H$_{min}$ est effectuée tel que décrit précédemment à partir du majorant B$_F$ du biais en sortie de la fonction de composition F nouvellement décrit plutôt que de celui précédemment décrit.

Selon une première variante, lors de l'étape d'estimation 106, le module de calcul 42 détermine un majorant moins fin du biais sur une composante a.F en sortie de la fonction de composition F, par exemple selon l'équation suivante :

[MATH 13]

$$B_{a.F} = \sqrt{\sum_{w=(w_1,...,w_L)\in Spectre(a.F)} \left( \prod_{i=1}^{L} B_i^{2w_i} \right)}$$

où $\sum_{w=(w_1,\ldots,w_L)\in Spectre(a.F)}$ est la somme sur tous les vecteurs $w$ dans le spectre de la fonction booléenne a.F.

Le spectre de la fonction booléenne a.F est l'ensemble des vecteur $w$ tel que $\hat{F}(a,w) \neq 0$.

Toujours selon la première variante, si le vecteur nul appartient au spectre de la fonction a.F de la fonction de composition F, alors lors l'étape d'estimation 106, le majorant $B_{a.F}$ du biais est déterminé par exemple selon l'équation suivante plutôt que selon l'équation (13) :

[MATH 14]

$$B_{a.F} = \sqrt{\left(1 + B_1{}^2\right)\left(1 + B_2{}^2\right)\ldots\left(1 + B_L{}^2\right) - 1} = \sqrt{-1 + \sum_{i=1}^{L}\left(1 + B_i^2\right)}$$

Il est clair que la détermination du majorant $B_{a.F}$ selon l'une des équations (13) et (14) est plus simple que selon l'équation (7). L'homme du métier remarquera tout de même que le majorant $B_{a.F}$ obtenu selon l'équation (13) ou (14) est plus grand que celui déterminé selon l'équation (7).

Selon une deuxième variante, si la fonction de composition F est une fonction linéaire, lors de l'étape d'estimation 106, le majorant $B_F$ du biais en sortie de la fonction de composition F est déterminé selon l'équation suivante plutôt que selon l'équation (7) :

[MATH 15]

$$B_F = \max_{\substack{a\in\{0,1\}^k\setminus\{0\}\\u=F^t(a)}}\left(B_1^{u_1}B_2^{u_2}\ldots B_L^{u_L}\right) = \max_{\substack{a\in\{0,1\}^k\setminus\{0\}\\u=F^t(a)}}\left(\prod_{i=1}^{L}B_i^{u_i}\right)$$

où $\max_{\substack{a\in\{0,1\}^k\setminus\{0\}\\u=F^t(a)}}()$ est la fonction maximum sur tous les vecteurs $u$ tels que, pour tous vecteurs

$x$ de L coefficients et pour tout vecteur $a$ non nul de k coefficients,
$u = (u_1,\ldots,u_L) \in \{0,1\}^L = {}^tF(a)$ désigne les L coefficients de la forme linéaire des $k$ bits de sortie de $F$, a.F(x) écrite comme combinaison linéaire des L bits d'entrée de $F$, ie tel que $< a.|F(x) >=< u|x >$.

Selon une troisième variante, si la fonction de composition F est un code linéaire, lors de l'étape d'estimation 106, le module de calcul 42 détermine le majorant $B_F$ du biais en sortie de la fonction de composition F selon l'équation suivante plutôt que selon l'équation (7) :

[MATH 16]

$$B_F = \widetilde{B_1}\widetilde{B_2}\ldots\widetilde{B_d} = \prod_{i=1}^{d}\widetilde{B_i}$$

où, pour rappel, d est la distance minimale du code linaire, et
les

$$\widetilde{B_1}, \widetilde{B_2}, \ldots, \widetilde{B_d}$$

sont les d majorants $B_i$ de biais les plus grands parmi les L majorants de biais $B_i$.

Selon une quatrième variante combinable avec les première, deuxième et troisième variantes, si lors de l'étape d'acquisition 102, la marge M est acquise, alors lors de l'étape d'estimation 106, la détermination du majorant $B_F$ du biais en sortie de la fonction de composition F selon l'une des équations (13) et (15), ne comprend le produit que des L-M majorants de biais $B_i$ les plus élevés.

Selon la quatrième variante, si la fonction de composition est un code linéaire, la détermination du majorant $B_F$ du biais en sortie de la fonction de composition F selon l'équation (16) ne comprend le produit que des d-M majorants de biais $B_i$ les plus élevés.

Des variantes de l'estimation du minorant $H_{min}$ et/ou de la valeur moyenne des coefficients d'aléa $A^{moy}$ vont maintenant être décrites.

Selon une cinquième variante, si la fonction de composition F est linéaire, la valeur moyenne $A^{moy}$ est calculée selon l'équation suivante :

[MATH 17]

$$A^{moy} = \sum_{\substack{a\in\{0.1\}^k\backslash\{0\} \\ u=F^t(a)}} A_1(2)^{u_1} A_2(2)^{u_2} \dots A_L(2)^{u_L}$$

plutôt que selon l'équation (11). Il est clair que selon cette cinquième variante, lors de l'étape d'estimation 106, les coefficients $A_i(0)$ et $A_i(1)$ ne sont pas calculés.

Préférentiellement, cette cinquième variante est combinée avec la troisième variante.

Selon une sixième variante, lors de l'étape d'estimation 106, le calcul de la valeur moyenne $A^{moy}$ est remplacé par le calcul d'une valeur maximale $A^{max}$ qui est toujours supérieure à la valeur moyenne $A^{moy}$.

Selon cette sixième variante, la valeur maximale $A^{max}$ est calculée selon l'équation suivante :

[MATH 18]

$$A^{max} = \sum_{a\in\{0,1\}^k\backslash\{0\}} B_{a.F}^2$$

Selon cette sixième variante, lors de l'étape d'estimation 106, les coefficients $A_i$ ne sont pas calculés.

Selon une première sous-variante de cette sixième variante, si la fonction de composition F est linéaire, la valeur maximale $A^{max}$ est calculée selon l'équation suivante :

[MATH 19]

$$A^{max} = \sum_{\substack{a\in\{0,1\}^k\backslash\{0\} \\ u=F^t(a)}} \left( \prod_{i=1}^{L} B_i^{2u_i} \right)$$

plutôt que selon l'équation (18)

Selon une deuxième sous-variante de la sixième variante, si la fonction de composition F est un code linéaire, lors de l'étape d'estimation 106, aucun des coefficients $A_i$, de la valeur moyenne $A^{moy}$, ou de la valeur maximale $A^{max}$ ne sont calculés. A la place, lors de l'étape d'estimation 106, le minorant $H_{min}$ du taux d'entropie $\tau$ est directement calculé à partir du majorant $B_F$ du biais en sortie de la fonction de composition F, et du nombre k de bits dans le vecteur de bits V en sortie du module de composition 18, par exemple selon l'équation suivante :

[MATH 20]

$$H_{min} = \frac{1}{k}\left( k - \frac{(2^k-1)B_F^2}{2\ln(2)} - \Delta\left( (2^k-1)B_F \right) \right)$$

Où $\Delta(B) = \frac{1}{ln(2)}\left( (1-B)ln(1-B) + B - \frac{B^2}{2} \right)$

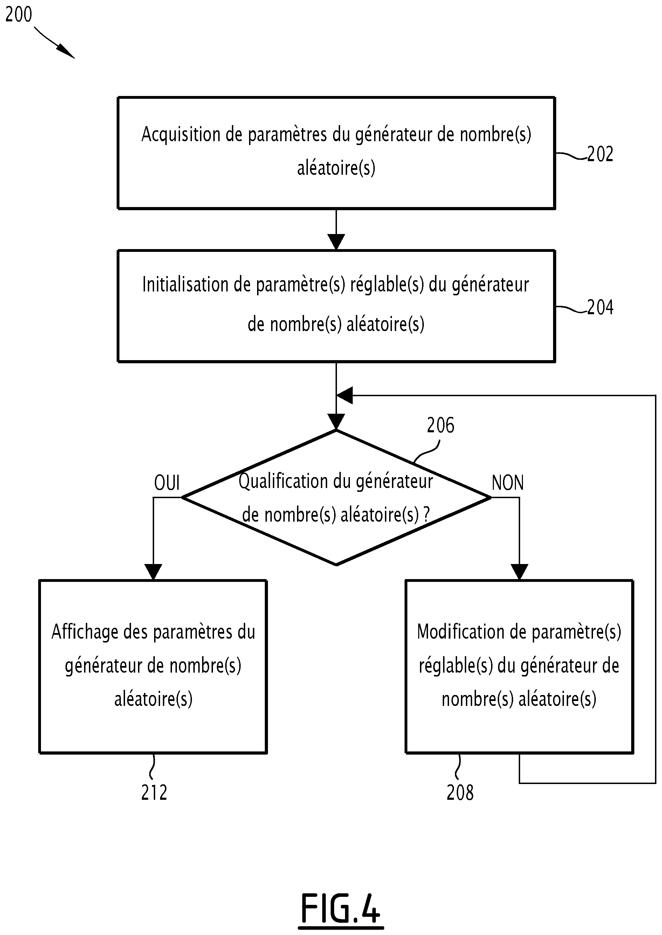

Un procédé 200 de conception du générateur 10 va maintenant être décrit en référence à la figure 4 représentant un organigramme de ce procédé 200.

Le procédé de conception 200 met en œuvre le dispositif électronique de qualification 20 de la figure 2.

Lors d'une étape de réception 202, le module d'entrée 40 reçoit, depuis l'utilisateur, la fonction de composition F comprenant le cas échéant les coefficients réglables C, les paramètre intrinsèques à chaque oscillateur à anneau 11, à

**EP 4 303 717 B1**

savoir : le rapport cyclique $\alpha_i$ et la volatilité $\sigma_i$, le nombre L d'oscillateurs à anneau 11 dans le générateur 10 et optionnellement la marge M. Ces éléments reçus depuis l'utilisateur forment par exemple un cahier des charges de générateur 10.

Lors d'une étape d'initialisation 204, la fréquence d'acquisition $f_{acq}$ et les coefficients réglables C de la fonction de composition F si ladite fonction F est une fonction linéaire qui n'est pas un code linéaire, sont initialisés à des valeurs initiales respective par l'utilisateur, via le périphérique 24.

Lors d'une étape de qualification 206, le dispositif de qualification 20 met en œuvre le procédé de qualification 100 décrit précédemment à partir des paramètres reçues et initialisés.

Puis, si suite à l'étape de qualification 206, le générateur 10 n'est pas qualifié, c'est-à-dire si le minorant $H_{min}$ du taux d'entropie $\tau$ est inférieur au seuil $H_{cible}$ de taux de d'entropie, alors, le procédé comprend une étape de modification 208. Lors de l'étape de modification 208, les paramètres réglables du générateur 10 sont modifiés.

Par exemple, le module d'entrée 40 reçoit depuis l'utilisateur et via le périphérique 24, de nouvelles valeurs de la fréquence d'acquisition $f_{acq}$, et le cas échéant des nouvelles valeurs des coefficients réglables C de la fonction de composition F.

Par exemple, si la fréquence d'acquisition $f_{acq}$ diminue, une durée plus grande s'écoule entre deux tirages. Ainsi, le taux d'entropie $\tau$ du générateur 10 augmente et le minorant estimé $H_{min}$ augmente également. Par exemple, une modification de la fréquence d'acquisition $f_{acq}$ est réalisée en modifiant la valeur de compteur prédéfinie N pour laquelle le compteur 17 envoie le signal d'horloge CLK avec un front montant. Une augmentation de cette valeur de compteur prédéfinie N induirait une augmentation de la période d'acquisition $\Delta T$ et donc une diminution de la fréquence d'acquisition $f_{acq}$.

Puis, l'étape de qualification 206 est réitérée.

Tant que le générateur 10 n'est pas qualifié lors de l'étape de qualification 206, les étapes de modifications 208 et de qualification 206 sont réitérées.

Si, suite à l'étape de qualification 206, le générateur 10 est qualifié, c'est-à-dire si le minorant estimé $H_{min}$ est supérieur au seuil de taux d'entropie $H_{cible}$, alors le procédé de conception comprend une étape de validation 212.

Lors de l'étape de validation 212, le module de sortie 46 envoie préférentiellement, à l'unité d'affichage 22 et à destination de l'utilisateur, un message indiquant les valeurs des paramètres du générateurs 10 pour lesquels le générateur 10 a été qualifié lors de l'étape de qualification 206.

Avec le procédé de qualification 100 selon l'invention, le taux d'entropie $\tau$ du générateur est garanti d'être supérieur au seuil $H_{cible}$ de taux d'entropie $\tau$ même si la fonction de composition F est complexe.

Ainsi, le procédé de qualification 100 permet de qualifier un générateur 10 plus complexe à qualifier que celui qualifié par l'état de l'art.

En outre, le recours à un code linéaire pour la fonction de composition F simplifie l'estimation du minorant $H_{min}$ tout en permettant de générer à chaque tirage une pluralité de bits $V_i$ dans le vecteur de bits $V_i$.

**Revendications**

1. Procédé (100) de qualification d'un générateur de un ou plusieurs nombres aléatoires (10) pour le respect d'un seuil prédéfini ($H_{cible}$) de taux d'entropie ($\tau$), le générateur de dudit ou desdits nombres aléatoires (10) comprenant :

   - un nombre (L) d'oscillateurs à anneau (11), chacun générant un signal créneau,
   - un module d'acquisition (12) d'une valeur du signal créneau ($S_i$) de chaque oscillateur à anneau (11) suivant une fréquence d'acquisition ($f_{acq}$), et
   - un module de composition (13) connecté au module d'acquisition (12) et propre à fournir, depuis les valeurs acquises des signaux créneaux ($S_i$), un vecteur de bits (V) formant ledit ou lesdits numbres aléatoires par application auxdites valeurs ($S_i$) d'une fonction de composition (F),
   le taux d'entropie ($\tau$) du générateur de nombre(s) aléatoire(s) (10) étant la limite, quand un nombre de générations (D) de vecteurs de bits (V) tend vers l'infini, d'un rapport entre l'entropie de Shannon par bit d'une suite des vecteurs de bits (V) successivement généré, et le nombre de générations successives (D),
   le procédé (100) étant mis en œuvre par un dispositif électronique de qualification (20) et **caractérisé en ce que** le procédé comprend les étapes suivantes :

      - réception (102) du nombre (L) d'oscillateurs à anneau (11) compris dans le générateur dudit ou desdits nombres aléatoires (10), de la fonction de composition (F), de la fréquence d'acquisition ($f_{acq}$) de la valeur du signal créneau ($S_i$) de chaque oscillateur à anneau (11), d'au moins un paramètre intrinsèque ($\alpha_i$, $\sigma_i$) à chaque oscillateur à anneau (11) et du seuil prédéfini ($H_{cible}$) de taux d'entropie ($\tau$),
      - pour chaque oscillateur à anneau (11), détermination (104) d'un majorant ($B_i$) d'un biais ($\varepsilon_i$) à partir du ou des

paramètres intrinsèques ($\alpha_i$, $\sigma_i$) à l'oscillateur à anneau (11) et de la fréquence d'acquisition ($f_{acq}$),
- estimation (106) d'un minorant ($H_{min}$) du taux d'entropie ($\tau$) du générateur de nombre(s) aléatoire(s) (10) à partir du nombre (L) d'oscillateurs à anneau reçu (11), de la fonction de composition reçue (F) et de chaque majorant de biais déterminé ($B_i$),
- comparaison (108) du minorant estimé ($H_{min}$) au seuil prédéfini ($H_{cible}$) de taux d'entropie ($\tau$), et
- qualification (110) du générateur dudit ou desdits nombres aléatoires (10) uniquement si le minorant estimé ($H_{min}$) est supérieur au seuil prédéfini ($H_{cible}$) de taux d'entropie ($\tau$).

2. Procédé (100) selon la revendication 1, dans lequel, pour chaque oscillateur à anneau (11), les paramètres intrinsèques ($\alpha_i$, $\sigma_i$) sont représentatifs d'un modèle stochastique thermique dans chaque oscillateur à anneau (11) et comprennent : un rapport cyclique ($\alpha_i$) du signal créneau de chaque oscillateur à anneau (11) et une volatilité ($\sigma_i$) du modèle thermique de l'oscillateur à anneau (11).

3. Procédé (100) selon la revendication 1 ou 2, dans lequel la fonction de composition (F) est une fonction linéaire des valeurs acquises des signaux créneaux ($S_i$).

4. Procédé (100) selon la revendication précédente, dans lequel la fonction de composition (F) est un code correcteur linéaire **caractérisé par** une longueur égale au nombre (L) d'oscillateurs à anneau (11), une dimension égale au nombre de bits dans le vecteur de bits (V) et une distance minimale prédéfinie (d).

5. Procédé (100) selon la revendication précédente, dans lequel l'étape d'estimation (106) comprend :

une détermination d'un majorant ($B_F$) d'un biais en sortie de la fonction de composition (F) du générateur dudit ou desdits nombres aléatoires (10) à partir des majorants ($B_i$) du biais ($\varepsilon_i$) de chaque oscillateur à anneau (11), et une estimation du minorant ($H_{min}$) du taux d'entropie ($\tau$) du générateur dudit ou desdits nombres aléatoires (10) selon l'équation suivante :

$$H_{min} = \frac{1}{k}\left( k - \frac{(2^k - 1)B_F^2}{2\ln(2)} - \Delta\left((2^k - 1)B_F\right) \right)$$

où ln() est le logarithme népérien, et

$$\Delta(B_F) = \frac{1}{\ln(2)}\left( (1 - B_F)\ln(1 - B_F) + B_F - \frac{B_F^2}{2} \right).$$

6. Procédé (100) selon la revendication précédente, dans lequel lors l'étape d'estimation (106), le majorant ($B_F$) du biais en sortie de la fonction de composition (F) est égal au produit des majorants ($B_i$) des biais ($\varepsilon_i$) de chaque oscillateur à anneau (11).

7. Procédé (100) selon l'une quelconque des revendications précédentes, dans lequel l'étape de réception (102) comprend la réception d'une marge (M) quantifiant un nombre d'oscillateur(s) à anneau (11) dont une contribution au minorant estimé ($H_{min}$) est nulle, lors de l'étape d'estimation (104), le minorant ($H_{min}$) de taux d'entropie ($\tau$) est estimé en outre à partir de la marge (M).

8. Produit programme d'ordinateur comprenant des instructions logicielles qui, lorsqu'elles sont exécutées par un ordinateur, mettent en œuvre un procédé de qualification (100) selon l'une quelconque des revendications précédentes.

9. Procédé (200) de conception d'un générateur d'un ou plusieurs nombres aléatoires (10) comprenant :

- un nombre (L) d'oscillateurs à anneau (11), chacun générant un signal créneau,
- un module d'acquisition (12) d'une valeur du signal créneau ($S_i$) de chaque oscillateur à anneau (11) suivant une fréquence d'acquisition ($f_{acq}$), et
- un module de composition (13) connecté au module d'acquisition (12) et propre à fournir, depuis les valeurs acquises des signaux créneaux ($S_i$), un vecteur de bits (V) formant le nombre aléatoire, par application auxdites

valeurs ($S_i$) d'une fonction de composition (F),

le taux d'entropie ($\tau$) du générateur dudit ou desdits nombres aléatoires (10) étant la limite, quand un nombre de générations (D) de vecteurs de bits (V) tend vers l'infini, d'un rapport entre l'entropie de Shannon par bit d'une suite des vecteurs de bits (V) successivement généré, et le nombre de générations successives (D), le procédé (200) étant **caractérisé en ce qu'**il comprend les étapes suivantes :

- réception (202) du nombre (L) d'oscillateurs à anneau (11), de la fonction de composition (F) et d'au moins un paramètre intrinsèque ($\alpha_i$, $\sigma_i$) à chaque oscillateur à anneau (11),
- initialisation (204) d'une valeur de la fréquence d'acquisition ($f_{acq}$),
- qualification (206) du générateur dudit ou desdits nombres aléatoires (10) par un procédé de qualification (100) selon l'une quelconque des revendications 1 à 7, à partir du nombre (L) d'oscillateurs à anneau (11), de la fonction composition (F) comprenant les coefficients réglables (C), ledit ou lesdits paramètres intrinsèques ($\alpha_i$, $\sigma_i$), et de la valeur de la fréquence d'acquisition ($f_{acq}$), tant que le générateur dudit ou desdits nombres aléatoires (10) n'est pas qualifié lors de l'étape de qualification (206), le procédé (200) comprend en outre les étapes suivantes :
- modification (208) de la fréquence d'acquisition ($f_{acq}$) et de préférence de la fonction de composition (F), et réitération de l'étape de qualification (206).

**10.** Dispositif (20) électronique de qualification d'un générateur de un ou plusieurs nombres aléatoires (10) pour le respect d'un seuil prédéfini ($H_{cible}$) de taux d'entropie ($\tau$), le générateur de nombre(s) aléatoire(s) (10) comprenant :

- un nombre (L) d'oscillateurs à anneau (11), chacun générant un signal créneau,
- un module d'acquisition (12) d'une valeur du signal créneau ($S_i$) de chaque oscillateur à anneau (11) suivant une fréquence d'acquisition ($f_{acq}$), et
- un module de composition (13) connecté au module d'acquisition (12) et propre à fournir, depuis les valeurs acquises des signaux créneaux ($S_i$), un vecteur de bits (V) formant le nombre aléatoire, par application auxdites valeurs ($S_i$) d'une fonction de composition (F),

le taux d'entropie ($\tau$) du générateur de nombre(s) aléatoire(s) (10) étant la limite, quand un nombre de générations (D) de vecteurs de bits (V) tend vers l'infini, d'un rapport entre l'entropie de Shannon par bit d'une suite des vecteurs de bits (V) successivement généré, et le nombre de générations successives (D),

le dispositif électronique de qualification (20) étant **caractérisé en ce qu'**il comprend:

- un module d'entrée (40) propre à recevoir le nombre (L) d'oscillateurs à anneau (11) compris dans le générateur dudit ou desdits nombres (10), la fonction de composition (F), la fréquence d'acquisition ($f_{acq}$) de la valeur du signal créneau ($S_i$) de chaque oscillateur à anneau (11), au moins un paramètre intrinsèque ($\alpha_i$, $\sigma_i$) à chaque oscillateur à anneau (11), et le seuil prédéfini ($H_{cible}$) de taux d'entropie ($\tau$),
- un module de calcul (42) propre à déterminer, pour chaque oscillateur à anneau (11), un majorant ($B_i$) d'un biais ($\varepsilon_i$) à partir dudit ou desdits paramètres intrinsèques ($\alpha_i$, $\sigma_i$) à l'oscillateur à anneau (11) et à partir de la fréquence d'acquisition ($f_{acq}$), le module de calcul (42) étant en outre propre à estimer le minorant ($H_{min}$) du taux d'entropie ($\tau$) du générateur dudit ou desdits nombres aléatoires (10) à partir du nombre acquis (L) d'oscillateurs à anneau (11), de la fonction de composition acquise (F) et de chaque majorant ($B_i$) de biais ($\varepsilon_i$) déterminé,
- un module de comparaison (44) du minorant estimé ($H_{min}$) au seuil prédéfini ($H_{cible}$) de taux d'entropie ($\tau$), et
- un module de sortie (46) propre à qualifier le générateur de nombre(s) aléatoire(s) (10) uniquement si le minorant estimé ($H_{min}$) est supérieur au seuil prédéfini ($H_{cible}$) de taux d'entropie ($\tau$).

**Patentansprüche**

**1.** Verfahren (100) zur Qualifizierung eines Generators einer oder mehreren Zufallszahlen (10) für die Einhaltung eines vordefinierten Schwellenwerts ($H_{Ziel}$) für die Entropie-Rate ($\tau$), der Generator der einen oder mehreren Zufallszahlen (10) umfassend:

- eine Anzahl (L) von Ringoszillatoren (11), die jeweils ein Kreissignal erzeugen,
- ein Erfassungsmodul (12) eines Werts des Kreissignals ($S_i$) von jedem Ringoszillator (11) gemäß einer Erfassungsfrequenz ($f_{erfasst}$), und
- ein Zusammensetzungsmodul (13), das mit dem Erfassungsmodul (12) verbunden und geeignet ist, um anhand der erfassten Werte der Kreissignale ($S_i$) einen Vektor von Bits (V) bereitzustellen, der die Zufallszahl(en) bildet,

indem auf die Werte ($S_i$) eine Zusammensetzungsfunktion (F) angewendet wird,
wobei die Entropie-Rate ($\tau$) des Zufallszahlgenerators (10) der Grenzwert, wenn eine Anzahl von Generationen (D) von Bitvektoren (V) gegen unendlich tendiert, eines Verhältnisses zwischen der Shannon-Entropie pro Bit einer Folge von aufeinanderfolgend erzeugten Bitvektoren (V) und der Anzahl von aufeinanderfolgenden Generationen (D) ist, wobei das Verfahren (100) von einer elektronischen Qualifizierungsvorrichtung (20) implementiert wird und **dadurch gekennzeichnet ist, dass** das Verfahren die folgenden Schritte umfasst:

- Empfangen (102) der Anzahl (L) der Ringoszillatoren (11), die in dem Generator der Zufallszahl(en) (10) enthalten sind, der Zusammensetzungsfunktion (F),
der Erfassungsfrequenz ($f_{erfasst}$) des Werts des Kreissignals ($S_i$) von jedem Ringoszillator (11), mindestens eines intrinsischen Parameters ($\alpha_i$, $\sigma_i$) für jeden Ringoszillator (11) und des vordefinierten Schwellenwerts ($H_{Ziel}$) der Entropie-Rate ($\tau$),
- für jeden Ringoszillator (11), Bestimmen (104) eines Majoranten ($B_i$) einer Verzerrung ($\varepsilon_i$) anhand des oder der intrinsischen Parameter ($\alpha_i$, $\sigma_i$) des Ringoszillators (11) und der Erfassungsfrequenz ($f_{erfasst}$),
- Schätzen (106) eines Minoranten ($H_{min}$) der Entropie-Rate ($\tau$) des Zufallszahlgenerators (10) anhand der empfangenen Anzahl (L) von Ringoszillatoren (11), der empfangenen Zusammensetzungsfunktion (F) und jedem bestimmten Verzerrungs-Majoranten ($B_i$),
- Vergleichen (108) des geschätzten Minoranten ($H_{min}$) mit dem vordefinierten Schwellenwert ($H_{Ziel}$) der Entropie-Rate ($\tau$), und
- Qualifizieren (110) des Generators der einen oder mehreren Zufallszahlen (10) nur dann, wenn

der geschätzte Minorant ($H_{min}$) größer ist als der vordefinierte Schwellenwert ($H_{Ziel}$) für die Entropie-Rate ($\tau$).

2.  Verfahren (100) nach Anspruch 1, wobei die intrinsischen Parameter ($\alpha_i$, $\sigma_i$) für jeden Ringoszillator (11) repräsentativ für ein stochastisches thermisches Modell in jedem Ringoszillator (11) sind und Folgendes umfassen: ein Tastverhältnis ($\alpha_i$) des Kreissignals von jedem Ringoszillator (11) und eine Volatilität ($\sigma_i$) des thermischen Modells des Ringoszillators (11).

3.  Verfahren (100) nach Anspruch 1 oder 2, wobei die Zusammensetzungsfunktion (F) eine lineare Funktion der erfassten Werte der Kreissignale ($S_i$) ist.

4.  Verfahren (100) nach dem vorherigen Anspruch, wobei die Zusammensetzungsfunktion (F) ein linearer Korrekturcode ist, **gekennzeichnet durch** eine Länge, die gleich wie die Anzahl (L) der Ringoszillatoren (11) ist, eine Dimension, die gleich wie die Anzahl der Bits in dem Bitvektor (V) ist, und einen vordefinierten Mindestabstand (d).

5.  Verfahren (100) nach dem vorherigen Anspruch, wobei der Schätzungsschritt (106) Folgendes umfasst:

eine Bestimmung eines Majoranten ($B_F$) einer Ausgangsverzerrung der Zusammensetzungsfunktion (F) des Generators der einen oder der mehreren Zufallszahlen (10) anhand des Majoranten ($B_i$) der Verzerrung ($\varepsilon_i$) von jedem Ringoszillator (11), und
eine Schätzung des Minoranten ($H_{min}$) der Entropie-Rate ($\tau$) des Generators der einen oder der mehreren Zufallszahlen
(10) gemäß der folgenden Gleichung:

$$H_{min} = \frac{1}{k}\left(k - \frac{(2^k - 1)B_F^2}{2\ln(2)} - \Delta\left((2^k - 1)B_F\right)\right)$$

wobei ln() der neperische Logarithmus ist, und

$$\Delta(B_F) = \frac{1}{\ln(2)}\left((1 - B_F)\ln(1 - B_F) + B_F - \frac{B_F^2}{2}\right).$$

6.  Verfahren (100) nach dem vorherigen Anspruch, wobei bei dem Schätzungsschritt (106) der Majorant ($B_F$) der Ausgangsverzerrung der Zusammensetzungsfunktion (F) gleich wie das Produkt der Majoranten ($B_i$) der Verzerrungen ($\varepsilon_i$) von jedem Ringoszillator (11) ist.

7. Verfahren (100) nach einem der vorherigen Ansprüche, wobei der Empfangsschritt (102) das Empfangen einer Marge (M) umfasst, die eine Anzahl von Ringoszillator(en) (11) quantifiziert, von denen ein Beitrag zu dem geschätzten Minoranten ($H_{min}$) null ist,
in dem Schätzungsschritt (104) der Minorant ($H_{min}$) der Entropie-Rate ($\tau$) zusätzlich anhand der Marge (M) geschätzt wird.

8. Computerprogrammprodukt, umfassend Softwareanweisungen, die, wenn sie von einem Computer ausgeführt werden, ein Qualifizierungsverfahren (110) nach einem der vorherigen Ansprüche durchführen.

9. Verfahren (200) zum Entwerfen eines Generators für eine oder mehrere Zufallszahlen (10), umfassend:

- eine Anzahl (L) von Ringoszillatoren (11), die jeweils ein Kreissignal erzeugen,
- ein Erfassungsmodul (12) eines Werts des Kreissignals ($S_i$) von jedem Ringoszillator (11) gemäß einer Erfassungsfrequenz ($f_{erfasst}$), und
- ein Zusammensetzungsmodul (13), das mit dem Erfassungsmodul (12) verbunden und geeignet ist, um anhand der erfassten Werte der Kreissignale ($S_i$) einen Vektor von Bits (V) bereitzustellen, der die Zufallszahl bildet, indem auf die Werte ($S_i$) eine Zusammensetzungsfunktion (F) angewendet wird,
wobei die Entropie-Rate ($\tau$) des Generators der Zufallszahl(en) (10) der Grenzwert ist, wenn
eine Anzahl von Generationen (D) von Bitvektoren (V) gegen unendlich tendiert, eines Verhältnisses zwischen der Shannon-Entropie pro Bit einer Folge von aufeinanderfolgend erzeugten Bitvektoren (V) und der Anzahl von aufeinanderfolgenden Generationen (D), wobei das Verfahren (200) **dadurch gekennzeichnet ist, dass** es die folgenden Schritte umfasst:

- Empfangen (202) der Anzahl (L) von Ringoszillatoren (11), der Zusammensetzungsfunktion (F) und mindestens eines intrinsischen Parameters ($\alpha_i$, $\sigma_i$) an jedem Ringoszillator (11),
- Initialisieren (204) eines Werts der Erfassungsfrequenz ($f_{erfasst}$),
- Qualifizieren (206) des Generators der Zufallszahl(en)

(10) durch ein
Qualifizierungsverfahren (100) nach einem der Ansprüche 1 bis 7 anhand der Anzahl (L) der Ringoszillatoren (11), der Zusammensetzungsfunktion (F), umfassend die einstellbaren Koeffizienten (C), des oder der intrinsischen Parameter ($\alpha_i$, $\sigma_i$) und des Wert der Erfassungsfrequenz ($f_{erfasst}$), wobei, wenn der Generator der Zufallszahl(en) (10) in dem Qualifizierungsschritt (206) nicht qualifiziert, das Verfahren (200) ferner die folgenden Schritte umfasst:

- Modifizieren (208) der Erfassungsfrequenz ($f_{erfasst}$) und vorzugsweise der Zusammensetzungsfunktion (F) und Wiederholen des Qualifizierungsschritts (206).

10. Elektronische Vorrichtung (20) zur Qualifizierung eines Generators einer oder mehreren Zufallszahlen (10) für die Einhaltung eines vordefinierten Schwellenwerts ($H_{Ziel}$) der Entropie-Rate ($\tau$), der Zufallszahlgenerator (10) Folgendes umfassend:

- eine Anzahl (L) von Ringoszillatoren (11), die jeweils ein Kreissignal erzeugen,
- ein Erfassungsmodul (12) eines Werts des Kreissignals ($S_i$) von jedem Ringoszillator (11) gemäß einer Erfassungsfrequenz ($f_{erfasst}$), und
- ein Zusammensetzungsmodul (13), das mit dem Erfassungsmodul (12) verbunden und geeignet ist, um anhand der erfassten Werte der Kreissignale ($S_i$) einen Vektor von Bits (V) bereitzustellen, der die Zufallszahl bildet, indem auf die Werte ($S_i$) eine Zusammensetzungsfunktion (F) angewendet wird,
wobei die Entropie-Rate ($\tau$) des Zufallszahlgenerators (10) der Grenzwert, wenn eine Anzahl von Generationen (D) von Bitvektoren (V) gegen unendlich tendiert, eines Verhältnisses zwischen der Shannon-Entropie pro Bit einer Folge von aufeinanderfolgend erzeugten Bitvektoren (V) und der Anzahl von aufeinanderfolgenden Generationen (D) ist, wobei die elektronische Qualifizierungsvorrichtung (20) **dadurch gekennzeichnet ist, dass** sie Folgendes umfasst:

- ein Eingangsmodul (40), das geeignet ist, um die Anzahl (L) der Ringoszillatoren (11), die in dem Generator der Zufallszahl(en)

(10) enthalten sind, die
Zusammensetzungsfunktion (F), der Erfassungsfrequenz ($f_{erfasst}$) des Werts des Kreissignals ($S_i$) von jedem Ringoszillator (11), mindestens einen intrinsischen Parameter ($\alpha_i$, $\sigma_i$) für jeden Ringoszillator (11) und den vordefinierten Schwellenwert ($H_{Ziel}$) der Entropie-Rate ($\tau$) zu empfangen,

- ein Rechenmodul (42), das geeignet ist, um für jeden Ringoszillator (11) einen Majoranten ($B_i$) einer Verzerrung ($\varepsilon_i$) anhand des oder der intrinsischen Parameter ($\alpha_i$, $\sigma_i$) des Ringoszillators (11) und anhand der Erfassungsfrequenz ($f_{erfasst}$) zu bestimmen, wobei das Rechenmodul (42) ferner geeignet ist, um den Minoranten ($H_{min}$) der Entropie-Rate ($\tau$) des Generators der einen oder der mehreren Zufallszahlen

(10) anhand der
erfassten Anzahl (L) von Ringoszillatoren (11), der erfassten Zusammensetzungsfunktion (F) und jedes bestimmten Majoranten ($B_i$) der Verzerrung ($\varepsilon_i$) zu schätzen,

- ein Modul (44) zum Vergleichen des geschätzten Minoranten ($H_{min}$) mit dem vordefinierten Schwellenwert ($H_{Ziel}$) der Entropie-Rate ($\tau$), und
- ein Ausgabemodul (46), das geeignet ist, um den Zufallszahlgenerator (10) nur dann zu qualifizieren, wenn der geschätzte Minorant ($H_{min}$) größer ist als der vordefinierte Schwellenwert ($H_{Ziel}$) der Entropie-Rate ($\tau$).

**Claims**

1. A method (100) for qualifying a generator of one or more random number(s) (10) for compliance with a predefined threshold ($H_{target}$) of entropy rate ($\tau$), the generator of said random number(s) (10) including:

   - a number (L) of ring oscillators (11), each generating a slot signal,
   - an acquisition module (12) of a value of the slot signal ($S_i$) of each ring oscillator (11) according to an acquisition frequency ($f_{acq}$), and
   - a composition module (13) connected to the acquisition module (12) and capable of providing, from the acquired values of the slot signals ($S_i$), a vector of bits (V) forming said random number(s),

     applying a composition
     function (F) to said values ($S_i$),

   the entropy rate ($\tau$) of the generator of random number(s) (10) being the limit, when a number of generations (D) of bit vectors (V) tends toward infinity, of a ratio between the Shannon entropy per bit of a sequence of bit vectors (V) successively generated, and the number of successive generations (D),
   the method (100) being implemented by an electronic qualification device (20) and **characterized in that** the method comprises the following steps:

   - receiving (102) the number (L) of ring oscillators (11) included in the generator of random number(s)

     (10), the composition function (F),
     the acquisition frequency ($f_{acq}$) of the value of the slot signal ($S_i$) of each ring oscillator (11), at least one intrinsic parameter ($\alpha_i$, $\sigma_i$) of each ring oscillator (11) and the predefined threshold ($H_{target}$) entropy rate ($\tau$),

   - for each ring oscillator (11), determining (104) an upper bound ($B_i$) of a bias ($\varepsilon_i$) from the intrinsic parameter(s) ($\alpha_i$, $\sigma_i$) of the ring oscillator (11) and the acquisition frequency ($f_{acq}$),
   - estimating (106) a lower bound ($H_{min}$) of the entropy rate ($\tau$) of the generator of random number(s) (10) from the number (L) of ring oscillators received (11), the received composition function (F) and each determined bias upper bound ($B_i$),
   - comparing (108) the estimated lower bound ($H_{min}$) to the predefined threshold ($H_{target}$) of entropy rate ($\tau$), and
   - qualifying (110) the generator of said random number(s) (10) only if the estimated lower bound ($H_{min}$) is greater than the predefined threshold ($H_{target}$) of entropy rate ($\tau$).

2. The method (100) according to claim 1, wherein, for each ring oscillator (11), the intrinsic parameters ($\alpha_i$, $\sigma_i$) are

representative of a thermal stochastic model in each ring oscillator (11) and comprise: a duty cycle ($\alpha_i$) of the slot signal of each ring oscillator (11) and a volatility ($\sigma_i$) of the thermal model of the ring oscillator (11).

3. The method (100) according to claim 1 or 2, wherein the composition function (F) is a linear function of the acquired values of the slot signals ($S_i$).

4. The method (100) according to the preceding claim, wherein the composition function (F) is a linear corrector code **characterized by** a length equal to the number (L) of ring oscillators (11), a dimension equal to the number of bits in the bit vector (V) and a predefined minimum distance (d).

5. The method (100) according to the preceding claim, wherein the estimating step (106) comprises:

determining an upper bound ($B_F$) of a bias at the output of the composition function (F) of the generator of said random number(s) (10) from the upper bounds ($B_i$) of the bias ($\varepsilon_i$) of each ring oscillator (11), and estimating the lower bound ($H_{min}$) of the entropy rate ($\tau$) of the generator of said random number(s) (10) according to the following equation:

$$H_{min} = \frac{1}{k}\left(k - \frac{(2^k - 1)B_F^2}{2\ln(2)} - \Delta\left((2^k - 1)B_F\right)\right)$$

where ln( ) is the natural logarithm, and

$$\Delta(B_F) = \frac{1}{\ln(2)}\left((1 - B_F)\ln(1 - B_F) + B_F - \frac{B_F^2}{2}\right).$$

6. The method (100) according to the preceding claims, wherein during the estimating step (106), the upper bound ($B_F$) of the bias at the output of the composition function (F) is equal to the product of the upper bounds ($B_i$) of the biases ($\varepsilon_i$) of each ring oscillator (11).

7. The method (100) according to any one of the preceding claims, wherein the receiving step (102) comprises receiving a margin (M) quantifying a number of ring oscillator(s) (11) whose contribution to the estimated lower bound ($H_{min}$) is zero, during the estimating step (104), the lower bound ($H_{min}$) of entropy rate ($\tau$) is further estimated from the margin (M).

8. A computer program product comprising software instructions which, when executed by a computer, implement a quantifying method (100) according to any preceding claim.

9. A method (200) for designing a generator of one or more random number(s) (10), comprising:

- a number (L) of ring oscillators (11), each generating a slot signal,
- an acquisition module (12) of a value of the slot signal ($S_i$) of each ring oscillator (11) according to an acquisition frequency ($f_{acq}$), and
- a composition module (13) connected to the acquisition module (12) and capable of providing, from the acquired values of the slot signals ($S_i$), a vector of bits (V) forming the random number, by applying a composition function (F) to said values ($S_i$),
the entropy rate ($\tau$) of the generator of said random number(s)
(10) being the limit, when a
number of generations (D) of bit vectors (V) tends toward infinity, of a ratio between the Shannon entropy per bit of a sequence of bit vectors (V) successively generated, and the number of successive generations (D),
the method (200) being **characterized in that** it comprises the following steps:

- receiving (202) the number (L) of ring oscillators (11), the composition function (F) and at least one intrinsic parameter ($\alpha_i$, $\sigma_i$) of each ring oscillator (11),
- initializing (204) a value of the acquisition frequency ($f_{acq}$),

- qualifying (206) the generator of said random number(s) (10)
by a qualifying method (100) according to any one of claims 1 to 7, from the number (L) of ring oscillators (11), the composition function (F) comprising the adjustable coefficients (C), said intrinsic parameter(s) $(\alpha_i, \sigma_i)$, and the value of the acquisition frequency $(f_{acq})$, as long as the generator of said random number(s) (10) is not qualified during the qualifying step (206), the method (200) further comprising the following steps:
- modifying (208) the acquisition frequency $(f_{acq})$ and preferably the composition function (F), and reiterating the qualifying step (206).

10. An electronic device (20) for qualifying a generator of one or more random number(s) (10) for compliance with a predefined threshold $(H_{target})$ of entropy rate $(\tau)$, the generator of random number(s) (10) comprising:

- a number (L) of ring oscillators (11), each generating a slot signal,
- an acquisition module (12) of a value of the slot signal $(S_i)$ of each ring oscillator (11) according to an acquisition frequency $(f_{acq})$, and
- a composition module (13) connected to the acquisition module (12) and capable of providing, from the acquired values of the slot signals $(S_i)$, a vector of bits (V) forming the random number, by applying a composition function (F) to said values $(S_i)$,
the entropy rate $(\tau)$ of the generator of random number(s) (10) being the limit, when a number of generations (D) of bit vectors (V) tends toward infinity, of a ratio between the Shannon entropy per bit of a sequence of bit vectors (V) successively generated, and the number of successive generations (D),
the electronic qualification device (20) being **characterized in that** it comprises:

- an input module (40) capable of receiving the number (L) of ring oscillators (11) comprised in the generator of said number(s) (10), the composition function (F), the acquisition frequency $(f_{acq})$ of the value of the slot signal $(S_i)$ of each ring oscillator (11), at least one intrinsic parameter $(\alpha_i, \sigma_i)$ of each ring oscillator (11), and the predefined threshold $(H_{target})$ of entropy rate $(\tau)$,
- a calculation module (42) capable of determining, for each ring oscillator (11), an upper bound $(B_i)$ of a bias $(\varepsilon_i)$ from said intrinsic parameter(s) $(\alpha_i, \sigma_i)$ of the ring oscillator (11) and from the acquisition frequency $(f_{acq})$, the calculation module (42) being further capable of estimating the lower bound $(H_{min})$ of the entropy rate $(\tau)$ of the generator of said random number(s) (10) from
the acquired number (L) of ring oscillators (11), the acquired composition function (F) and each upper bound $(B_i)$ of bias $(\varepsilon_i)$ determined,
- a comparison module (44) of the estimated lower bound $(H_{min})$ to the predefined threshold $(H_{target})$ of entropy rate $(\tau)$, and
- an output module (46) capable of qualifying the generator of random number(s) (10) only if the estimated lower bound $(H_{min})$ is greater than the predefined threshold $(H_{target})$ of entropy rate $(\tau)$.

FIG.1

EP 4 303 717 B1

EP 4 303 717 B1

FIG.2

24

100

Acquisition de paramètres du générateur de nombre(s) aléatoire(s) ⌐102

Détermination d'un majorant $B_i$ d'un biais de chaque oscillateur à anneau ⌐104

Estimation d'un minorant $H_{min}$ de taux d'entropie du générateur de nombre(s) aléatoire(s) ⌐106

108

$H_{min} > H_{cible}$ ?

OUI         NON

Qualification du générateur de nombre(s) aléatoire(s)

Affichage d'un message d'échec de qualification du générateur de nombre(s) aléatoire(s)

110             112

## FIG.3

200

Acquisition de paramètres du générateur de nombre(s) aléatoire(s) — 202

Initialisation de paramètre(s) réglable(s) du générateur de nombre(s) aléatoire(s) — 204

206

OUI ← Qualification du générateur de nombre(s) aléatoire(s) ? → NON

Affichage des paramètres du générateur de nombre(s) aléatoire(s)

212

Modification de paramètre(s) réglable(s) du générateur de nombre(s) aléatoire(s)

208

FIG.4

## RÉFÉRENCES CITÉES DANS LA DESCRIPTION

**Littérature non-brevet citée dans la description**

- **MARKKU-JUHANI O SAARINEN**. *On Entropy and Bit Patterns of Ring Oscillator Jitter*, 03 February 2021
- From Physical to Stochastic Modeling of a TERO-Based TRNG. **BERNARD FLORENT et al.** JOURNAL OF CRYPTOLOGY. SPRINGER, 29 March 2018, vol. 32, 435-458
- On-chip jitter measurement for true random number generators. **YANG BOHAN et al.** 2017 ASIAN HARDWARE ORIENTED SECURITY AND TRUST SYMPOSIUM (ASIANHOST). IEEE, 19 October 2017, 91-96